# FASCICULE DE BREVET EUROPEEN

(11) **EP 0 716 546 B1**
(45) Date de publication et mention de la délivrance du brevet: **25.08.1999**
(21) Numéro de dépôt: 95203281.1
(22) Date de dépôt: 29.11.1995
(51) Int. Cl.: H04N 7/167, H04N 7/16

(54) **Procédé d'adressage d'usagers dans un système de télévision à accès réservé**
Verfahren zur Adressierung von Benutzern in einem Fernsehsystem mit reserviertem Zugriff
User addressing method in a television system with reserved access

(30) Priorité: 07.12.1994 FR 9414728
(43) Date de publication de la demande: 12.06.1996
(73) Titulaire: PHILIPS ELECTRONIQUE GRAND PUBLIC, 92150 Suresnes (FR); Koninklijke Philips Electronics N.V., 5621 BA Eindhoven (NL)
(72) Inventeur: Kerjean, Jean-Marie, F-75008 Paris (FR); Le Berre, Jacques, F-75008 Paris (FR)
(74) Mandataire: Caron, Jean

(56) Documents cités:
- WO-A-89/10664
- BBC RESEARCH DEPARTMENT REPORT, no. 10, Août 1988 TADWORTH, SURREY,GB, pages 1-18, D.T. WRIGHT 'CONDITIONAL ACCESS BROADCASTING: DATACARE 2'
- IEEE TRANSACTIONS ON CONSUMER ELECTRONICS, vol. 37, no. 3, 1 Août 1991 pages 432-436, XP 000263219 LENOIR V 'EUROCRYPT, A SUCCESSFUL CONDITIONAL ACCESS SYSTEM'

## Description

La présente invention concerne un procédé d'adressage d'usagers dans un système de télévision à accès réservé, système dans lequel un émetteur envoie des mots d'adresses dites collectives, permettant de sélectionner pour chacun de ces mots un groupe comprenant une pluralité d'usagers particuliers.

Elle concerne aussi un appareil de réception.

Un procédé d'adressage d'usagers est connu du document BBC RESEARCH DEPARTMENT REPORT, n° 10, Août 1988, TADWORTH, SURREY, GB, pages 1-18, D.T. WRIGHT "CONDITIONAL ACCESS BROADCASTING : DATACARE 2". Selon ce document, des adresses partagées simples utilisent trois octets, mais leur usage est limité à 256 usagers ("shared address", page 6, col2, ligne 8).

Pour la gestion des titres d'accès concernant les usagers dans un tel système de télévision à accès réservé, on a besoin de pouvoir sélectionner un groupe particulier d'usagers pour lui adresser un message de contrôle des titres d'accès le concernant. Les mécanismes d'adressage utilisés aujourd'hui dans la plupart des systèmes d'accès conditionnel utilisent un jeu d'adresses spécifiant l'appareil de réception auquel elles s'adressent. On distingue notamment :
- l'adresse unique, qui spécifie un usager et un seul,
- l'adresse partagée, spécifiant par exemple l'ensemble des clients d'un opérateur de programmes déterminé,
- l'adresse collective, qui spécifie un groupe d'usagers possédant quelque chose en commun, par exemple: "les joueurs de pétanque de Tokyo".

Un appareil de réception d'usager est informé à l'avance des définitions des différentes adresses collectives qui concernent cet appareil, lesquelles sont enregistrées en mémoire. Du côté de cet appareil de réception, pour reconnaître qu'un mot d'adresse reçu d'un émetteur concerne l'appareil, on recherche si ce mot d'adresse contient une adresse identique à l'une de celles qui sont enregistrées en mémoire. Cette procédure est appelée un "filtrage", et les moyens pour la réaliser des "filtres".

En ce qui concerne les adresses collectives, plusieurs opérateurs de programmes différents sont susceptibles de s'adresser à des usagers de cette façon, et chacun d'eux a sa propre manière de définir des groupes. Il y a une adresse différente pour chaque groupe défini, et chaque opérateur a ses propres adresses ; cela produit en fin de compte un grand nombre d'adresses. Ainsi le nombre total d'adresses que doit traiter un appareil récepteur peut dépasser le nombre de filtres dont il dispose pour l'acquisition des messages.

Un but de l'invention est de fournir un procédé pour l'adressage de groupes qui permette l'utilisation d'adresses différenciées selon l'opérateur, tout en ayant en fin de compte un seul critère de filtrage en réception.

A cet effet, selon l'invention :
- un mot d'adresse collective ayant une longueur totale donnée, il est divisé en plusieurs parties de longueurs égales, placées bout-à-bout,
- une adresse collective est définie par :
   - une donnée exprimée par un champ de bits de longueur égale à la longueur d'une des dites parties, et
   - une position obligée correspondant à une des dites parties dans le mot d'adresse collective.
- un mot d'adresse collective est émis par l'émetteur sous forme d'un mot ayant la dite longueur totale, dont la partie correspondant à la position obligée pour cette adresse contient le champ de bits de l'adresse et qui est fait, pour le reste, de bits tous identiques.

L'invention est donc basée sur l'idée de définir une adresse non seulement par son contenu proprement dit, mais par sa position dans un mot plus grand qu'elle. Cela permet de distinguer l'une de l'autre des adresses en nombre plus grand que celui qui serait autorisé par le nombre de bits du champ, en traitant plusieurs adresses en même temps au moyen d'un dispositif normalement prévu pour un mot plus long.

Si la longueur totale du mot est de quarante bits, la longueur de l'adresse collective peut être avantageusement de quatre bits.

Dans ce cas, bien que quatre bits permettent de compter seulement jusqu'à seize, c'est finalement cent soixante adresses différentes qui peuvent être distinguées les unes des autres, étant donné qu'il y a en outre dix positions différentes possibles.

Chacune des informations définissant une adresse collective concernant le dit usager est avantageusement mémorisée sous la forme de deux variables, dont l'une définit la dite position obligée, et l'autre le contenu du dit champ de bits.

Du côté d'un usager, afin d'exploiter au mieux la structure définie pour le mot, le procédé suivant est utilisé selon l'invention, pour reconnaître si un message reçu de l'émetteur concerne cet usager :
- un mot de longueur égale à la dite longueur totale est construit par la mise bout-à-bout de plusieurs champs, correspondant chacun au dit contenu d'une adresse prise parmi la dite pluralité d'adresses collectives dont dispose l'appareil de réception de l'usager, chacun de ces champs étant placé dans la position obligée définie pour l'adresse,
- ce mot est comparé avec le mot d'adresse collective du message reçu, une concordance entre les deux mots étant recherchée séparément pour chacun des champs.
- le message est reconnu si une concordance est trouvée.

Un appareil de réception, destiné à permettre le traitement de mots d'adresse collective tels que définis ci-dessus, est avantageusement muni de moyens pour générer plusieurs champs de bits correspondant chacun au dit contenu d'une adresse prise parmi la dite pluralité d'adresses collectives dont dispose l'appareil de réception de l'usager, et pour placer bout-à-bout ces champs, chacun dans la position obligée définie pour l'adresse, de façon à constituer un mot de longueur égale à la dite longueur totale, et de moyens pour, lorsqu'il reçoit un message, rechercher séparément pour chacun des champs une concordance entre le mot constitué et l'adresse collective véhiculée par le message reçu.

A cet effet il comporte, pour chacune des dites adresses collectives différentes, une première position de mémoire pour une variable qui définit la dite position obligée, et une seconde position de mémoire pour une variable qui définit le contenu du dit champ de bits.

Un procédé d'adressage selon l'invention est défini dans la revendication 1 et un appareil de réception selon l'invention est défini dans la revendication 5.

Ces aspects de l'invention ainsi que d'autres aspects plus détaillés apparaîtront plus clairement grâce à la description suivante d'un mode de réalisation non limitatif.

La figure 1 représente une zone d'enregistrement dans une mémoire d'un appareil récepteur, pour des données définissant une adresse collective.

La figure 2 représente un mot d'adresse collective émis par l'émetteur.

La figure 3 représente un champ de filtrage en réception.

Le système de filtrage des messages de gestion des titres d'accès défini par la normalisation MPEG ("Moving Picture Expert Group") et DVB ("Digital Video Broadcasting") prévoit une longueur de-filtrage sur adresse d'au moins 40 bits. Aujourd'hui les fabricants de circuits intégrés de démultiplexage conçoivent des circuits ayant entre quatre et cinq mémoires tampon d'acquisition de ces messages, chaque mémoire tampon étant utilisée pour l'acquisition d'un message de type quelconque (adresse collective, partagée, ou unique).

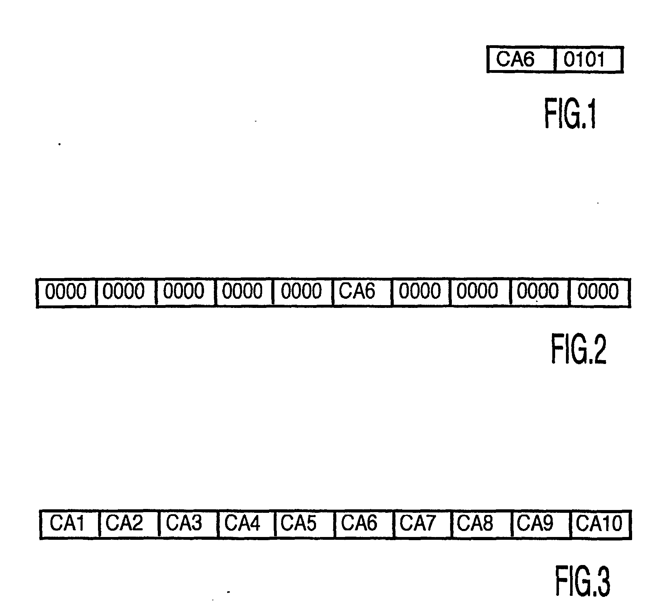

Un exemple d'adresse collective est présenté sur la figure 1. Il comprend un champ de quatre bits ayant une valeur appelée CA6, pour "Collective Adress n° 6", associé à une valeur d'index exprimée ici par 0101, signifiant une situation obligée en position cinq (les positions possibles allant de 0 à 9).

Un message transmis par un émetteur, pour spécifier l'adresse collective de la figure 1, comporte un mot d'adresse représenté sur la figure 2. Ce mot comporte dix champs de quatre bits chacun. Tous les champs sont remplis de zéros, à l'exception du champ en position cinq, qui contient la valeur CA6. On pourrait aussi bien imaginer, en variante, que les champs non significatifs soient remplis de 1. Bien entendu aucun champ d'adresse utile ne doit avoir une valeur 0000 ou 1111.

La réception d'un message utilisant ce type d'adressage est alors conditionnée par la reconnaissance, par groupe de quatre bits, d'une correspondance entre le mot d'adresse transmis et la position de l'adresse et sa valeur.

Pour assurer cette reconnaissance, du côté d'un l'usager, un mot de quarante bits, c'est-à-dire de longueur égale à la dite longueur totale, est construit par la mise bout-à-bout de plusieurs champs correspondant chacun au dit contenu d'une adresse, prise parmi la dite pluralité d'adresses collectives dont dispose l'appareil de réception de l'usager, chacun de ces contenus étant placé dans sa position obligée. Un tel mot est représenté par la figure 3. Chaque valeur d'adresse CA1, CA2, etc, représentée par un champ de quatre bits, est placée dans sa position obligée, par exemple le champ de contenu "CA6" est placé en position cinq.

Ce mot construit dans l'appareil de l'usager (figure 3) est comparé avec le mot d'adresse collective reçu de l'émetteur (figure 2), une concordance entre les deux mots étant recherchée séparément pour chacune des positions obligées. Ici le message sera reconnu puisque une concordance sera trouvée entre le champ CA6 de la figure 2 et le champ CA6 de la figure 3. Ce mécanisme permet donc l'utilisation d'une mémoire tampon unique dans l'appareil de l'usager pour traiter en une fois un ensemble d'adresses collectives.

Le nombre des différentes adresses collectives qui concernent un appareil est susceptible de dépasser dix. Dans ce cas, plusieurs mot du genre de celui de la figure 3 sont construits, et chacun d'eux est comparé au mot de la figure 2. Cela peut aussi être nécessaire si deux adresses ont la même position obligée : elles devront de ce fait être introduites dans deux mots distincts, chacun du type de celui de la figure 3. La comparaison de plusieurs mots du type de celui de la figure 3 peut être faite en même temps au moyen de plusieurs circuits identiques : les circuits qui sont intégrés dans les circuits de démultiplexage cités plus haut ayant entre quatre et cinq mémoires tampon pour l'acquisition de messages, chacune de ces mémoires tampons peut être utilisée pour comparer un mot différent, mot du type de celui de la figure 3, avec le même mot reçu de l'émetteur (du type de celui de la figure 2).

Bien entendu d'autres possibilités existent pour la définition des dimensions. On peut imaginer par exemple des mots de 32 bits, dans lesquels des champs de 4 bits ont une position entre 0 et 7 qui est alors définie sur trois bits, ou des champs de cinq bits dans un mot de 40 bits, etc.

## Revendications

1. Procédé d'adressage d'usagers dans un système de télévision à accès réservé, système dans lequel un émetteur envoie des mots d'adresses dites collectives, permettant de sélectionner pour chacun de ces mots un groupe comprenant une pluralité d'usagers particuliers,
caractérisé en ce que :
- un mot d'adresse collective ayant une longueur totale donnée, il est divisé en plusieurs parties de longueurs égales, placées bout-à-bout,
- une adresse collective est définie par :
- une donnée exprimée par un champ de bits de longueur égale à la longueur d'une des dites parties, et
- une position obligée correspondant à une des dites parties dans le mot d'adresse collective;
- un mot d'adresse collective est émis par l'émetteur sous forme d'un mot ayant la dite longueur totale, dont la partie correspondant à la position obligée pour cette adresse contient le champ de bits de l'adresse et qui est fait, pour le reste, de bits tous identiques.

2. Procédé d'adressage selon la revendication 1,
caractérisé en ce que, un appareil de réception d'un usager ayant en mémoire des informations définissant une pluralité d'adresses collectives différentes les unes des autres, concernant toutes le dit usager, chacune d'elles est mémorisée sous la forme de deux variables, dont l'une définit la dite position obligée, et l'autre le contenu du dit champ de bits.

3. Procédé d'adressage selon la revendication 2,
caractérisé en ce que, du côté d'un usager, pour reconnaître si un message reçu de l'émetteur concerne cet usager :
- un mot de longueur égale à la dite longueur totale est construit par la mise bout-à-bout de plusieurs champs, correspondant chacun au dit contenu d'une adresse prise parmi la dite pluralité d'adresses collectives dont dispose l'appareil de réception de l'usager, chacun de ces champs étant placé dans la position obligée définie pour l'adresse,
- ce mot est comparé avec le mot d'adresse collective du message reçu, une concordance entre les deux mots étant recherchée séparément pour chacun des champs,
- le message est reconnu si une concordance est trouvée.

4. Procédé d'adressage selon la revendication 1,
**caractérisé en ce que**, la dite longueur totale étant de quarante bits, la longueur de l'adresse collective est de quatre bits.

5. Appareil de réception **caractérisé en ce que**, l'appareil étant destiné à permettre à un usager la réception d'émissions dans lesquelles sont utilisés des adresses collectives sous forme de mots ayant une longueur totale donnée, divisés en plusieurs parties de longueurs égales, placées bout-à-bout, l'appareil est muni d'une mémoire qui contient des informations définissant une pluralité d'adresses collectives définies chacune par :
- une donnée exprimée par un champ de bits de longueur égale à la longueur d'une des dites parties, et
- une position obligée correspondant à une des dites parties dans le mot d'adresse collective,
adresses collectives différentes les unes des autres mais concernant toutes le dit usager,
et en ce que l'appareil est muni en outre :
- de moyens pour générer plusieurs champs de bits correspondant chacun au dit contenu d'une adresse prise parmi la dite pluralité d'adresses collectives dont dispose l'appareil de réception de l'usager, et pour placer bout-à-bout ces champs, chacun dans la position obligée définie pour l'adresse, de façon à constituer un mot de longueur égale à la dite longueur totale,
- de moyens pour, lorsqu'il reçoit un message, rechercher séparément pour chacun des champs une concordance entre le mot constitué et l'adresse collective véhiculée par le message reçu.

6. Appareil de réception selon la revendication 5,
caractérisé en ce qu'il comporte, pour chacune des dites adresses collectives différentes, une première position de mémoire pour une variable qui définit la dite position obligée, et une seconde position de mémoire pour une variable qui définit le contenu du dit champ de bits.

## Patentansprüche

1. Verfahren zur Adressierung von Benutzern in einem Fernsehsystem mit reserviertem Zugriff, ein System, in dem ein Sender kollektiv genannte Adreßwörter sendet, die es gestatten, für jedes dieser Wörter eine Gruppe auszuwählen, die eine Vielzahl privater Nutzer umfaßt,
dadurch gekennzeichnet, daß:
- ein kollektives Adreßwort mit gegebener Gesamtlänge in mehrere gleich lange, hintereinander liegende Teile aufgeteilt wird,
- eine kollektive Adresse definiert wird durch:
- eine Angabe, die durch ein Bitfeld einer Länge ausgedrückt wird, die gleich der Länge eines der genannten Teile ist und
- eine vorgeschriebene Position, die einem der genannten Teile des kollektiven Adreßworts entspricht;
- ein kollektives Adreßwort von einem Sender in Form eines Worts gesendet wird, das die genannte Gesamtlänge hat, und dessen Teil, der der vorgeschriebenen Position für diese Adresse entspricht, das Bitfeld der Adresse enthält, und das im übrigen nur aus identischen Bits besteht.

2. Verfahren zur Adressierung gemäß Patentanspruch 1, dadurch gekennzeichnet, daß ein Empfangsgerät eines Benutzers, das im Speicher Informationen hat, die eine Vielzahl voneinander verschiedener kollektiver Adressen beschreiben, die alle den genannten Benutzer betreffen, und die jeweils in Form von zwei Variablen gespeichert sind, deren eine die genannte vorgeschriebene Position und deren andere den Inhalt des genannten Bitfelds bestimmt.

3. Verfahren zur Adressierung gemäß Patentanspruch 2, dadurch gekennzeichnet, daß an der Seite eines Benutzers zum Feststellen, ob eine vom Sender empfangene Nachricht den Benutzer betrifft:
- ein Wort mit einer Länge gleich der genannten Gesamtlänge durch das Hintereinanderlegen mehrerer Felder erzeugt wird, die jeweils dem genannten Inhalt einer Adresse entsprechen, die aus der Vielzahl kollektiver Adressen gewählt wurde, über die das Empfangsgerät des Benutzers verfügt, wobei jedes Feld in die vorgeschriebene Position gebracht wird, die für die Adressse festgelegt wurde,
- dieses Wort mit dem kollektiven Adreßwort der empfangenen Nachricht verglichen wird, wobei eine Übereinstimmung zwischen den beiden Wörtern getrennt für jedes Feld gesucht wird,
- die Nachricht angenommen wird, wenn eine Übereinstimmung gefunden wird.

4. Verfahren zur Adressierung gemäß Patentanspruch 1, dadurch gekennzeichnet, daß, wenn die genannte Gesamtlänge vierzig Bits beträgt, die Länge der kollektiven Adresse vier Bits ist.

5. Empfangsgerät, dadurch gekennzeichnet, daß wenn das Gerät so konstruiert ist, daß es einem Benutzer den Empfang von Sendungen gestattet, in denen kollektive Adressen in Form von Wörtern verwendet werden, die eine gegebene Gesamtlänge haben, in mehrere gleich lange Teile geteilt sind, die hintereinander liegen, das Gerät mit einem Speicher versehen ist, der Informationen enthält, die eine Mehrzahl kollektiver Adressen definieren, die jeweils beschrieben werden durch:
- eine Datenangabe, die durch ein Bitfeld der Länge ausgedrückt wird, die gleich der Länge eines der genannten Teile ist, und
- eine vorgeschriebene Position, die einer der genannten Teile im kollektiven Adreßwort entspricht, voneinander verschiedene kollektive Adressen, die jedoch alle den genannten Benutzer betreffen,
und dadurch gekennzeichnet, daß das Gerät außerdem versehen ist mit:
- Mitteln zum Erzeugen mehrerer Bitfelder, die jeweils dem genannten Inhalt einer Adresse entsprechen, die aus der genannten Vielzahl kollektiver Adressen entnommen wurde, über die das Empfangsgerät des Benutzers verfügt, und zum Hintereinanderlegen dieser Felder jeweils in der für diese Adresse festgelegten vorgeschriebenen Position, so daß ein Wort mit der gleichen Länge wie die genannte Gesamtlänge entsteht,
- Mitteln, um beim Empfang getrennt für jedes Bitfeld eine Übereinstimmung zwischen dem erzeugten Wort und der kollektiven Adresse festzustellen, die von der empfangenen Nachricht transportiert wurde.

6. Empfangsgerät gemäß Patentanspruch 5, dadurch gekennzeichnet, daß es für jede der genannten verschiedenen kollektiven Adressen einen ersten Speicherplatz für eine Variable, die die genannte vorgeschriebene Position definiert, und einen zweiten Speicherplatz für eine Variable umfaßt, die den Inhalt des genannten Bitfelds definiert.

## Claims

1. A user-addressing method in an authorised access television system in which a transmitter transmits collective address words enabling selection of a group comprising a plurality of special users for each of these words,
characterized in that
- a collective address word has a given overall length which is divided into several sections of equal length, placed end to end,
- a collective address is defined by
- a data expressed by a field of bits having a length which is equal to the length of one of said sections, and
- a compulsory position corresponding to one of said sections in thecollective address word,
- a collective address word is transmitted by the transmitter in the form of a word having said overall length, whose section corresponding to the compulsory position for this address comprises the field of bits of the address and the rest of which is composed of bits which are all identical.

2. An addressing method as claimed in claim 1, characterized in that the memory in a receiver for a user contains information components defining a plurality of collective addresses which are different from each other and all of which concern said user, each component being stored in the form of two variables, one of which defines said compulsory position and the other defines the contents of said field of bits.

3. An addressing method as claimed in claim 2, characterized in that, at the user end, for recognising whether a message received from the transmitter concerns this user,
- a word having a length which is equal to said overall length is constructed by placing several fields end to end, each corresponding to said contents of an address taken from said plurality of collective addresses available to the user receiver, each of these fields being placed in the compulsory position defined for the address,
- this word is compared with the collective address word of the received message, while conformity between the two words is searched separately for each field,
- the message is recognised if conformity is found.

4. An addressing method as claimed in claim 1, characterized in that said overall length covers forty bits and the length of the collective address covers four bits.

5. A receiver, characterized in that, for enabling a user to receive transmissions in which collective addresses are used in the form of words having a given overall length divided into several sections of equal length, placed end to end,
the receiver is provided with a memory which contains information components defining a plurality of collective addresses each defined by:
- a data expressed by a field of bits having a length which is equal to the length of one of said sections, and
- a compulsory position corresponding to one of said sections in the collective address word,
which collective addresses are different from each other but all of which concern said user, and in that the receiver is also provided with:
- means for generating several fields of bits each corresponding to said contents of an address taken from said plurality of collective addresses available to the user receiver, and for placing each of these fields end to end in the compulsory position defined for the address so as to constitute a word having a length which is equal to said overall length,
- means by which conformity between the constituted word and the collective address conveyed by the received message is searched separately for each field, when said receiver receives a message.

6. A receiver as claimed in claim 5, characterized in that it comprises, for each of said different collective addresses, a first memory location for a variable which defines said compulsory position, and a second memory location for a variable which defines the contents of said field of bits.
